# FASCICULE DE BREVET EUROPEEN

(11) **EP 2 625 221 B1**
(45) Date de publication et mention de la délivrance du brevet: **30.09.2015**
(21) Numéro de dépôt: 11779823.1
(22) Date de dépôt: 07.10.2011
(51) Int. Cl.: C08K 5/103, C08L 67/00, C08K 5/1535

(54) **PLASTIFICATION DE POLYESTERS ALIPHATIQUES PAR DES ESTERS ALKYLIQUES DE DIANHYDROHEXITOLS**
WEICHMACHUNG VON ALIPHATISCHEN POLYESTERN MIT DIANHYDROHEXITOLALKYLESTERN
PLASTICIZING OF ALIPHATIC POLYESTERS WITH ALKYL ESTERS OF DIANHYDRO HEXITOLS

(30) Priorité: 08.10.2010 FR 1058202
(43) Date de publication de la demande: 14.08.2013
(73) Titulaire: Roquette Frères, 62136 Lestrem (FR)
(72) Inventeur: COUDYSER, Laurie, F-59590 Raismes (FR); SABRE, Philippe, F-59270 Saint Jans Cappel (FR)
(74) Mandataire: Cabinet Plasseraud
(86) Numéro de dépôt international: PCT/FR2011/052353
(87) Numéro de publication internationale: WO 2012/045988

(56) Documents cités:
- EP-A1- 2 143 743
- US-B1- 6 395 810

## Description

L'invention a pour objet une composition de polyester aliphatique ou semi-aliphatique plastifiée par un ester de diol particulier. L'invention a également pour objet un procédé de fabrication de ladite composition ainsi que des utilisations de cette composition. Un autre objet de l'invention est l'utilisation de cet ester de diol en tant que plastifiant d'un polyester aliphatique ou semi-aliphatique.

L'utilisation de matières plastiques s'est généralisée dans de nombreuses applications. Les quantités de plastique produites et utilisées dans le monde ont ainsi augmenté de manière importante ces dernières années, conduisant à une augmentation du volume de déchets et à des problèmes environnementaux.

Pour faciliter l'élimination de ces déchets plastiques, les polymères biodégradables font l'objet d'un intérêt tout particulier.

A titre d'exemple de polymère biodégradable, on peut citer le « polyéthylène biodégradable » qui est en réalité constitué de polyéthylène non biodégradable et d'un additif permettant de le rendre biodégradable.

Parmi ces polymères d'intérêt figurent également les polyesters aliphatiques ou semi-aliphatiques qui, grâce à leur structure particulière, présentent un caractère biodégradable intrinsèque même en l'absence d'un additif.

Par « polyester semi-aliphatique», on entend tout polyester comprenant au moins 70 % en moles de motifs aliphatiques, c'est-à-dire de motifs exempts de cycle aromatique.

Par « polyester aliphatique », on entend tout polyester exclusivement constitué de motifs aliphatiques.

Par « motif » dans un polyester, on entend tout motif obtenu pouvant être par polycondensation de monomères formant des polyesters, à savoir les monomères choisis parmi les acides dicarboxyliques, les diols et les hydroxyacides.

A titre d'exemple, le poly(acide lactique) (PLA), le poly(acide glycolique) (PGA) et le polycaprolactone (PCL) sont des polyesters aliphatiques issus d'acide hydroxyalcanoïque. On peut citer comme polyester obtenus par polycondensation d'un diol et d'un acide dicarboxylique le poly(butylène succinate) (PBS) qui est un polyester aliphatique ou encore le poly(butylène adipate-co-téréphtalate) (PBAT) qui est un polyester semi-aliphatique résultant de la polycondensation de butanediol, d'un acide dicarboxylique aliphatique (acide adipique) et d'un acide dicarboxylique aromatique (acide téréphtalique).

Cependant, ces polyesters peuvent présenter certains inconvénients. En particulier, leurs propriétés mécaniques peuvent être insuffisantes pour certaines utilisations. Par exemple, le PLA, en particulier le PLA à forte cristallinité, présente un allongement à la rupture très faible à température ambiante (de l'ordre de quelques pourcents seulement) et est ainsi très cassant. Pour pouvoir les utiliser dans des applications plus nombreuses, il est nécessaire d'améliorer les propriétés de ces polyesters. Pour ceci, ces polyesters peuvent être mélangés avec des « plastifiants ».

Par « plastifiant », on entend tout produit qui, lorsqu'il est mélangé en quantité suffisante avec un polymère, a pour fonction de diminuer la température de transition vitreuse dudit polymère.

En diminuant la température de transition vitreuse du polymère, la souplesse de ce dernier est augmentée et les propriétés mécaniques de ce polymère plastifié sont modifiées. Ainsi, en ajoutant à une composition de polymère un plastifiant de celui-ci, on observe généralement une diminution du module d'Young, une diminution de la contrainte à la rupture et/ou une augmentation de la déformation à la rupture. Ces propriétés modifiées du polymère lui permettent d'être utilisé dans des applications plus nombreuses, par exemple dans des films souples.

Cependant; un plastifiant utilisé pour un certain type de polymère n'est pas nécessairement adapté à un autre type de polymère.

A titre d'exemple, on peut citer le document EP0523789 A1 décrivant des essais de plastification du PLA par de nombreux plastifiants connus. Le trioléate de glycérol, le décanoate de glycérol, le propylène glycol, le trihexanoate de glycérol, le glycérol, la triacétine, les lactates et les citrates, qui sont des plastifiants connus du polychlorure de vinyle (PVC), ne plastifient pas ou insuffisamment le PLA, ne sont pas compatibles avec le PLA ou ont un effet plastifiant insuffisant.

On peut également se référer au chapitre 11 du Handbook of Plasticizers (Wypych G., ChemTec Publishing, 2004, Pages 273-379*)* qui précise les plastifiants pouvant être utilisés selon chaque type de polymère ; ces plastifiants adaptés sont différents selon le polymère visé.

L'effet de la plastification du PLA sur les propriétés mécaniques a également été étudié par Jocobsen et al. dans l'article Plasticizing polylactide-the effect of différent plasticizers on the mechanical properties (Polymer Engineering and Science, 1999, Vol. 39, n °7, pages 1303-1310*).* Un polyéthylène glycol, un acide gras partiellement estérifié ou un monoester de glucose sont introduits dans le PLA dans des quantités massiques inférieures ou égales à 10%. Le polyéthylène glycol est le plastifiant le plus efficace. La plastification du PLA reste insuffisante comme le montrent les valeurs très faibles d'allongement à la rupture.

Différents citrates sont également évalués en tant que plastifiant dans le PLA par Labrecque et al. dans l'article Citrate Esters as Plasticizers for Poly(lactic acid) (Journal of Applied Polymer Science, 1997, Vol. 66, n °8, pages 1507-1513*).* Aucun ester de diol cyclique n'est décrit comme plastifiant dans ce document. De plus, ces esters sont peu stables thermiquement et présentent une volatilité élevée, ce qui induit une importante perte du plastifiant lors de la préparation de la composition de PLA plastifiée.

Des cétals sont également décrits dans la demande US 2008/0242721 en tant que plastifiants de polymères, parmi lesquels le PLA ou le poly(acide 3-hydroxyalcanoïque).

Différents plastifiants de poly(acide hydroxyalcanoïque) sont également divulgués dans la demande WO 02/085983, parmi lesquels la paraffine, des époxy, des polyols, des esters d'acides gras ou d'acides dicarboxyliques, des huiles, des esters de glycérol, des phosphates. Cependant, aucun ester de diol cyclique n'est décrit comme plastifiant dans ce document.

Le document EP 2 143 743 A1 décrit quant à lui un procédé de préparation de résine, dans lequel un dérivé ester de 1,4:3,6-dianhydrohexitol est utilisé dans ce procédé comme solvant, co-solvant et/ou agent de coalescence et non pas comme plastifiant. Au tableau 1 est décrit un mélange comprenant un oligomère de polyester, qui comprend 60% en moles de motifs aliphatiques saturés, d'autres monomères et oligomères, ainsi qu'un diéther d'isosorbide : du diméthylisosorbide. Ce mélange intermédiaire est ensuite utilisé pour la fabrication de polyuréthane.

Ainsi, aucune des solutions actuelles n'est pleinement satisfaisante pour la plastification de polyesters aliphatiques ou semi-aliphatiques.

Par ailleurs, un autre problème des produits fabriqués à partir de ces polyesters est le niveau de nuisance sonore qui peut accompagner leur utilisation.

En effet, lors de la manipulation du produit par le consommateur final, le bruit créé peut être très important, et ceci particulièrement lorsque ledit produit comprend des feuilles ou des films de ces polyesters, ce qui est généralement le cas des emballages.

A titre d'exemple, suite au mécontentement de consommateurs, la société Frito Lay^{®} a dû retirer en 2010 des paquets de chips qu'elle avait mis sur le marché américain et dont l'emballage était réalisé à partir de PLA, et ceci parce que le bruit était trop important lorsque le consommateur de chips ouvre ou manipule le paquet. Des problèmes similaires ont pu également être observés dans les unités de fabrication d'articles réalisés en PLA, particulièrement lorsque ces objets sont obtenus par extrusion.

Il existe donc toujours à l'heure actuelle un besoin de trouver de nouvelles compositions plastifiées à base de ces polyesters, celles-ci présentant :
- une souplesse augmentée par rapport au polyester seul,
- une déformation à la rupture plus importante que celle du polyester seul,
- une faible odeur,
- et/ou une bonne compatibilité du plastifiant avec le polyester, permettant un bon mélange du plastifiant et du polyester lors de la fabrication et une faible, voire aucune exsudation du plastifiant du polymère pendant l'utilisation.

Il est également avantageux de pouvoir trouver une composition à base d'un de ces polyesters qui permette la fabrication d'objets dont la manipulation n'est pas excessivement bruyante, voire également de limiter les nuisances sonores lors de la fabrication dudit objet.

De plus, il est avantageux que le plastifiant utilisé ne se volatilise pas ou peu lors de la fabrication de cette composition.

La Demanderesse a découvert dans le cadre de ses recherches visant à améliorer les propriétés mécaniques de polyesters aliphatiques ou semi-aliphatiques, que ceux-ci pouvaient être plastifiés avantageusement par certains esters alkyliques de dianhydrohexitols, et qu'une telle plastification permettait de surmonter les inconvénients de l'état de la technique décrits ci-dessus.

L'invention a ainsi pour objet une composition comprenant :
- au moins un polyester aliphatique ou semi-aliphatique, contenant au moins 70 % en moles de motifs aliphatiques saturés, ces motifs étant susceptibles d'être obtenus par polycondensation de monomères choisis parmi :
   les acides hydroxyalcanoïques saturés de formule :

      HO-CₓH₂ₓ-COOH
   les acides dicarboxyliques saturés de formule :

      HOOC-CₓH₂ₓ-COOH
   et les diols saturés de formule :

      HO-CₓH₂ₓ-OH,
   où x = 1 - 20, de préférence 1 - 6,
   la partie restante des motifs étant formée par des motifs aromatiques ; et
- au moins un ester alkylique de 1,4 :3,6-dianhydrohexitol choisi parmi les monoesters alkyliques et les diesters alkyliques d'isosorbide, d'isomannide et d'isoidide.

L'utilisation d'esters de 1,4:3,6-dianhydrohexitol (et en particulier d'isosorbide) en tant que plastifiant de polymères vinyliques, de l'acétate de cellulose ou de caoutchoucs synthétiques est déjà connue du brevet US2387842 datant de 1944.

On peut également citer l'article d'Hachihama et Hayashi : Studies on the Préparation of Plasticizers from Carbohydrate Sources (Technol. Repts. Osaka Univ., Vol. 3, 1953*)* qui étudie la plastification du PVC par différents esters d'isosorbide.

Plus récemment, la plastification de polymères par ces esters de 1,4:3,6-dianhydrohexitol a également fait l'objet des demandes WO 99/45060 et US2007/0282042. On peut également citer la demande US 2009/0301348, qui porte sur des esters de 1,4:3,6-dianhydrohexitol particuliers, obtenus à partir d'un acide carboxylique saturé comprenant 9 atomes de carbone : ces esters sont utilisés en tant que plastifiants dans des suspensions de PVC ou de polymères acryliques.

Cependant, bien que l'ester de 1,4:3,6-dianhydrohexitol soit connu comme plastifiant des polymères cités dans le paragraphe ci-dessus, cet ester n'a jamais été utilisé comme plastifiant dans les polyesters aliphatiques ou semi-aliphatiques. De manière surprenante, un ester alkylique de 1,4:3,6-dianhydrohexitol permet de plastifier très efficacement ces polyesters particuliers, ce qui permet d'obtenir des propriétés améliorées par rapport aux compositions plastifiées de l'art antérieur à base de ces polyesters.

Le polyester aliphatique ou semi-aliphatique susceptible d'être obtenu par la polycondensation d'acides hydroxyalcanoïques saturés de formule HO - CₓH₂ₓ-COOH comprend les motifs suivants :

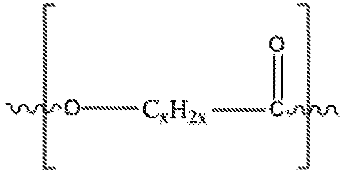

Ce polyester est également appelé ci-après poly(acide hydroxyalcanoïque) (PHA). Il peut être choisi parmi le poly(acide glycolique) (PGA), le poly(acide lactique) (PLA), l'acide poly(3-hydroxypropionique) (PHP), l'acide poly(2-hydroxybutyrique) (P2HB), l'acide poly(3-hydroxybutyrique (PHB), l'acide poly(4-hydroxybutyrique) (P4HB), l'acide poly(3-hydroxyvalérique) (PHV), l'acide poly(4-hydroxyvalérique) (P4HV) et l'acide poly(5-hydroxyvalérique) (P5HV), l'acide poly(6-hydroxyhexanoïque) (aussi connu sous le nom polycaprolactone (PCL)), l'acide poly(3-hydroxyhexanoïque), l'acide poly(4-hydroxyhexanoïque) ou l'acide poly(3-hydroxyheptanoïque).

Préférentiellement, le PHA est choisi parmi le PGA, le PCL et le PLA.

Le polyester aliphatique ou semi-aliphatique susceptible d'être obtenu par la polycondensation d'un acide dicarboxylique saturé de formule HOOC-CₓH₂ₓ-COOH et d'un diol saturé de formule HO - CₓH₂ₓ-OH comprend la structure suivante :

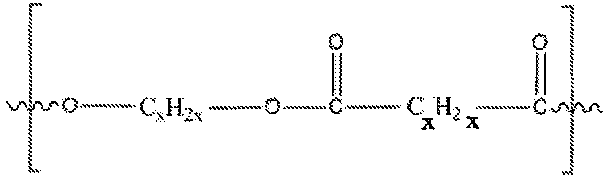

Un polyester aliphatique comprenant la structure ci-dessus peut être du poly(butylène succinate) (PBS), du poly(butylène adipate) (PBA), du poly(éthylène succinate) ou du poly(éthylène adipate).

Les structures de polyesters ci-dessus correspondent à des homopolymères de polyesters.

Les polyesters utilisés dans la présente invention peuvent toutefois également être des copolymères, c'est-à-dire des polyesters obtenus par polycondensation d'une combinaison de plusieurs diols, diacides et/ou hydroxyacides.

Les poly(acide hydroxyalcanoïque) (PHA) peuvent bien évidemment être obtenus par polymérisation directe de l'acide hydroxyalcanoïque monomère (par exemple l'acide glycolique pour le PGA ou l'acide lactique pour le PLA). Cet acide hydroxyalcanoïque comprend de 2 à 21 atomes de carbone.

L'obtention de ces poly(acides hydroxyalcanoïques) à partir des hydroxyacides s'avère toutefois souvent difficile en raison de l'eau réactionnelle libérée, et il est souvent préférable de synthétiser ces polyesters à partir d'esters cycliques et d'esters cycliques dimériques d'acide hydroxyalcanoïque, ces derniers étant obtenus par réaction de cyclisation de deux acides hydroxyalcanoïques.

A titre d'exemple de tels monomères, on peut citer le glycolide (1,4-dioxane-2,5-dione) qui est l'ester cyclique dimérique de l'acide glycolique, le lactide (3,6-diméthyl-1,4-dioxane-2,5-dione) qui est l'ester cyclique dimérique de l'acide lactique, α-α diméthyl-β-propiolactone qui est l'ester cyclique de l'acide 2,2 diméthyl-3-hydroxy-propanoïque, la β-butyrolactone qui est l'ester cyclique de l'acide 3-hydroxybutyrique, la δ-valérolactone qui est l'ester cyclique de l'acide 5-hydroxypentanoïque, la ε-caprolactone qui est l'ester cyclique de l'acide 6-hydroxyhexanoïque, les lactones des dérivés substitués méthyle de l'acide 6-hydroxyhexanoïque (tel que l'acide 2-méthyl-6-hydroxyhexanoïque, l'acide 3-méthyl-6-hydroxyhexanoïque, l'acide 4-méthyl-6-hydroxyhexanoïque, etc...).

Les acides hydroxyalcanoïques, sauf l'acide glycolique, présentent au moins un carbone assymétrique et existent donc sous forme d'énantiomères. Ainsi, l'acide lactique existe sous forme de (D)-acide lactique et de (L)-acide lactique. Le poly(acide lactique) peut être obtenu à partir de chacun de ces 2 énantiomères plus ou moins purs, ou à partir d'un mélange racémique des 2 énantiomères. A titre d'exemple, le PLA peut comprendre de 85% à 99,9% en moles de motifs (D)-acide lactique et de 1 à 15% en moles de motifs (L)-acide lactique.

Selon un mode de réalisation préféré de l'invention, le polyester aliphatique est un PLA semi-cristallin comprenant de 90% à 99,9%, de préférence de 92 à 99%, en moles de motifs (D)-acide lactique et de 0,1 à 10%, de préférence de 1 à 8% en moles de motifs (L)-acide lactique. Ce PLA semi-cristallin est en effet particulièrement cassant lorsqu'il n'est pas plastifié et sa bonne plastification est donc d'une importance déterminante. Malgré ces mauvaises propriétés de ce PLA à forte cristallinité, la composition selon l'invention obtenue à partir de ce PLA est, de manière surprenante, tout à fait satisfaisante pour des utilisations nécessitant une certaine flexibilité.

Un avantage de ces acides hydroxyalcanoïques pouvant être utilisés en tant que monomères pour la fabrication du polyester réside dans le fait qu'ils peuvent être fabriqués à partir de matières premières végétales, que l'on nomme de manière générale « matières premières renouvelables ». Du fait de l'épuisement des ressources pétrolières et des problèmes environnementaux liés à la consommation de ces ressources (réémission atmosphérique de CO₂), les polyesters fabriqués à partir de matières premières renouvelables sont particulièrement intéressants.

Le diol saturé utile à la formation du polyester aliphatique ou semi-aliphatique comprend de 1 à 20 atomes de carbone. Il peut être choisi parmi l'éthylène glycol, le 1,2-propanediol, le 1,3-propanediol, le 1,2-butanediol, le 2,3-butanediol, le 1,3-butanediol, le 1,4-butanediol, le 1,5-pentanediol, le 1,2-pentanediol, le 2-méthyl-2,4-pentanediol. Le diol est préférentiellement de l'éthylène glycol ou du 1,4-butanediol.

L'acide dicarboxylique saturé utile à la formation du polyester aliphatique ou semi-aliphatique comprend un nombre d'atomes de carbone allant de 3 à 22 atomes de carbone, préférentiellement de 3 à 8. Il peut être choisi parmi l'acide malonique, l'acide succinique, l'acide glutarique, l'acide adipique, l'acide pimélique, l'acide subérique, l'acide azélaïque et l'acide sébacique. L'acide dicarboxylique est préférentiellement de l'acide succinique ou de l'acide adipique.

Le polyester aliphatique peut être un homopolymère, c'est-à-dire un polyester obtenu par polycondensation d'un seul acide hydroxyalcanoïque ou d'un seul couple diol - acide dicarboxylique.

Dans les autres cas, le polyester aliphatique ou semi-aliphatique peut également être un copolymère, c'est-à-dire:
a) un polymère comprenant des motifs susceptibles d'être obtenus par polycondensation de monomères, ces monomères comprenant au moins deux acides hydroxyalcanoïques saturés différents, deux diols saturés différents et/ou deux acides dicarboxyliques saturés différents ;
b) et/ou un polymère comprenant des motifs différents de ceux susceptibles d'être obtenus par la polycondensation des monomères décrits ci-dessus.

A titre d'exemple de copolymère a), on peut citer le copolymère PLA/GA susceptible d'être obtenu à partir d'acide lactique et d'acide glycolique et le copolymère PHBV susceptible d'être obtenu à partir d'acide 3-hydroxybutyrique et d'acide 3-hydroxyvalérique.

Le copolymère b) peut comprendre au moins un motif aromatique obtenu par polycondensation d'un monomère aromatique, ces motifs aromatiques étant présents en des proportions inférieures à 30% en moles. Ces motifs aromatiques peuvent être introduits par copolycondensation d'acide dicarboxylique aromatique, tel que l'acide téréphtalique.

Le polyester ainsi formé est alors un polyester semi-aliphatique. A titre d'exemple de polyester semi-aliphatique, on peut citer le poly(butylène adipate-co-téréphtalate) (PBAT), le poly(éthylène succinate-co-terephthalate) ou le poly(butylène succinate-co-adipate-co-téréphtalate).

Avantageusement, le polyester semi-aliphatique comprend au moins au moins 80% en moles de motifs aliphatiques saturés, préférentiellement au moins 90%.

Le polyester est préférentiellement un polyester aliphatique, c'est-à-dire constitué de 100 % de motifs aliphatiques saturés. Il s'agit de préférence d'un poly(acide hydroxyalcanoïque en C₂₋₇), en particulier d'un poly(acide lactique).

Avantageusement, le polyester utile à l'invention a une masse molaire moyenne en poids (M_{w}) comprise dans la gamme allant de 3000 à 1000000 g/mol, par exemple de 20000 à 600000 g/mol, de manière préférée de 50000 à 400000 g/mol. Cette masse moyenne en poids peut être mesurée par chromatographie d'exclusion stérique (GPC, *gel permeation chromatrography*) en équivalent polystyrène selon la norme ISO 16014-1 et ISO 16014-3, en utilisant, du tétrahydrofurane comme éluant et une colonne (gel polystyrène) chauffée à 40°C.

Ce polyester aliphatique peut être préparé par les procédés connus de l'homme du métier. La polycondensation peut être réalisée en présence d'un catalyseur. Les procédés diffèrent selon la nature du monomère utilisé.

Par exemple, on utilise un premier type de procédé de déshydratation et de polycondensation directe d'acide hydroxyalcanoïque en présence de solvant et de catalyseur (voir par exemple les brevets US 5, 310, 865 et US 5, 401, 796).

Un autre type de procédé consiste à polymériser des esters cycliques dimériques par ouverture de cycle, ces dimères ayant été produits dans une étape préalable de déshydratation de l'acide hydroxyalcanoïque, comme par exemple dans le brevet US 2, 703, 316.

Des polymères à blocs peuvent également être fabriqués en utilisant le procédé décrit dans le document EP 712880.

Des procédés par voie fermentaire existent également pour la fabrication de PHA.

Des polyesters aliphatiques et semi-aliphatiques sont disponibles sur le marché. A titre d'exemple, la société KUREHA commercialise du PGA sous le nom de marque Kureflex^{®}. Des PLA sont également commercialisés par la société Natureworks sous le nom de marque Ingeo™ ou encore par la société Futerro^{®}. Des copolymères PHBV de marque Mirel™ sont également vendus par la société Telles. Du PCL est également disponible sous la marque CAPA^{®} par la société SOLVAY. La société IRE Chemical commercialise des grades de PBS (EnPol) et BASF des grades de PBAT sous la marque Ecoflex^{®}.

Selon une variante de l'invention, la composition comprend un mélange de polyesters utiles à l'invention : il peut être un mélange de plusieurs polyesters utiles à l'invention. Il peut s'agir par exemple d'un mélange de PLA et de PBAT. BASF commercialise de tels mélanges sous la marque Ecovio^{®} (45% en masse de PLA et 55% en masse de PBAT). La composition peut également comprendre des stéréocomplexes de PLA, c'est-à-dire des mélanges d'un premier PLA essentiellement constitué de motifs D-acide lactique et d'un second PLA essentiellement constitué de motifs L-acide lactique.

Selon l'invention, l'ester alkylique de 1,4:3,6-dianhydrohexitol permet de plastifier la composition et, préférentiellement, de l'assouplir.

Le 1,4:3,6-dianhydrohexitol est un diol de formule brute C₆H₁₀O₄.

On utilise selon l'invention trois isomères du 1,4:3,6-dianhydrohexitol : l'isosorbide, l'isomannide et l'isoidide, préférentiellement, l'isosorbide.

L'ester alkylique de 1,4 :3,6-dianhydrohexitol est choisi parmi les monoesters alkyliques et les diesters alkyliques.

Le ou les groupes alkyle des esters de 1,4:3,6-dianhydrohexitol sont avantageusement des groupes alkyle en C₃₋₁₅, de préférence des groupes alkyle en C₄₋₁₀, en particulier en C₆₋₉.

Le groupe alkyle peut être un groupe cycloalkyle, alkyle linéaire ou alkyle ramifié. Préférentiellement, le groupe alkyle est linéaire ou ramifié, tout préférentiellement linéaire.

Cet ester alkylique est produit par réaction d'estérification du 1,4:3,6-dianhydrohexitol avec un acide carboxylique. Une réaction d'estérification peut s'écrire de la manière suivante :

R-OH + HO(O)C - R' => R-O(O)C-R' + H₂O

Ainsi, si l'acide utilisé pour l'estérification comprend 8 atomes de carbone, le groupe alkyle de l'ester est R' et est donc un groupe alkyle en C₇.

A titre d'exemple d'acide carboxylique, on peut citer l'acide butyrique, l'acide valérique, l'acide caproïque, l'acide énanthique, l'acide caprylique, l'acide pélargonique, l'acide nonanoïque, l'acide caprique, l'acide undécylique, l'acide laurique, l'acide tridécylique, l'acide myristique, l'acide pentadécylique, l'acide palmitique.

Dans le cas où une seule des deux fonctions alcool du diol a réagi par esterification, l'ester est un monoester. Il s'agit d'un diester dans le cas où les deux fonctions alcool du diol ont réagi dans une réaction d'esterification. L'ester de 1,4:3,6-dianhydrohexitol est préférentiellement un diester. Selon ce mode de réalisation, le diester de 1,4:3,6-dianhydrohexitol peut comprendre différents groupes alkyle, c'est-à-dire que le diester est obtenu avec 2 acides carboxyliques différents.

Une composition comprenant un mélange d'esters de 1,4:3,6-dianhydrohexitol est bien évidemment conforme à l'invention.

Le 1,4:3,6-dianhydrohexitol est généralement obtenu par déshydratation interne d'un sucre hydrogéné. L'isosorbide, l'isomannide et l'isoidide peuvent ainsi être obtenus respectivement par déshydratation de sorbitol, de mannitol et d'iditol.

La synthèse de ces dianhydrohexitols est bien connue : différentes voies sont décrites par exemple dans les articles de Fletcher et al. (1,4,3,6-Hexitol dianhydride, I-isoidide, J Am Chem Soc, 1945, 67:1042-3 *ainsi que* 1,4,3,6-Dianhydro-I-iditol and the structure of isomannide and isosorbide, J Am Chem Soc, 1946, 68:939-41*),* de Montgomery et al. (Anhydrides of polyhydric alcohols. IV. Constitution of dianhydrosorbitol, J Chem Soc, 1946, 390-3 & Anhydrides of polyhydric alcohols. IX. Derivatives of 1,4-anhydrosorbitol from 1,4,3,6-dianhydrosorbitol, J Chem Soc, 1948, 237-41*),* de Fleche et al. (Isosorbide. Préparation, properties and chemistry, Starch/Staerke 1986, 38:26-30*),* de Fukuoka et al. (Catalytic conversion of cellulose into sugar Alcohols, Angew Chem Int Ed, 2006, 45:5161-3*),* dans le brevet US 3,023,223 ou encore certains des documents déjà cités portant sur l'ester de 1,4:3,6-dianhydrohexitol.

On obtient l'ester d'isosorbide, d'isomannide ou d'isoidide par réaction d'estérification du dianhydrohexitol correspondant avec un acide carboxylique, comme expliqué précédemment.

Pour les conditions de la réaction d'estérification, on peut se référer aux documents déjà cités portant sur l'ester de 1,4:3,6-dianhydrohexitol. On peut également utiliser l'enseignement de la demande WO2006/103338 au nom de la Demanderesse.

On peut obtenir un mélange d'esters de 1,4:3,6-dianhydrohexitol par simple mélange de différents esters obtenus par estérification du 1,4:3,6-dianhydrohexitol. Le mélange peut également être obtenu par estérification du 1,4:3,6-dianhydrohexitol par un mélange d'acide carboxylique.

Un autre avantage des compositions de la présente invention réside dans le fait que l'agent plastifiant, c'est-à-dire l'ester alkylique de 1,4:3,6-dianhydrohexitol peut être fabriqué à partir de ressources renouvelables, le dianhydrohexitol et l'acide carboxylique pouvant être obtenus à partir de ressources renouvelables.

L'ester alkylique de 1,4:3,6-dianhydrohexitol est présent dans les compositions selon l'invention en une quantité comprise dans la gamme allant de 1 à 30% en masse rapportée à la masse totale de polyesters aliphatiques et semi-aliphatiques. Cette quantité d'ester de 1,4:3,6-dianhydrohexitol est avantageusement comprise dans la gamme allant de 10 à 25% en masse, de préférence de 11 à 20% en masse, voire de 12 à 18% en masse, par exemple de 13 à 18% en masse rapportée à la masse totale de polyesters aliphatiques et semi-aliphatiques. Dans ces dernières gammes, l'effet plastifiant de l'ester de 1,4:3,6-dianhydrohexitol est tout particulièrement important, en particulier lorsqu'il est utilisé comme seul plastifiant dans la composition. La composition est fortement assouplie par rapport au polyester aliphatique ou semi-aliphatique seul, et l'exsudation du plastifiant hors du polymère après fabrication est très faible, voire nulle. Cet effet est particulièrement notable et avantageux lorsque le polyester aliphatique est un PLA semi-cristallin.

Selon un mode de réalisation de l'invention, la composition comprend en outre un autre plastifiant, c'est-à-dire un plastifiant différent de l'ester alkylique de 1,4:3,6-dianhydrohexitol. On peut citer à titre d'exemple le polypropyleneglycol éventuellement époxydé, le polyéthylèneglycol, les acides gras partiellement estérifiés ou les monoesters de glucose, les citrates, les adipates, l'huile de soja époxydée, l'huile de noix de coco acétylée, l'huile de lin éventuellement époxydée, les phtalates, les trimellitates et les acides hydroxyalcanoïques.

Préférentiellement, le rapport ester de 1,4:3,6-dianhydrohexitol/autre plastifiant est compris dans la gamme allant de (50 : 50) à (100 : 0), tout préférentiellement allant de (80: 20) à (100 : 0).

La composition peut comprendre en outre un polymère additionnel, différent du polyester aliphatique ou semi-aliphatique, comme par exemple un polyamide ou une polyoléfine. Préférentiellement, le rapport polyester aliphatique et/ou polyester semi-aliphatique/polymère additionnel est compris dans la gamme allant de (50 : 50) à (100 : 0), tout préférentiellement allant de (80 : 20) à (100 : 0).

Ce polymère additionnel peut avoir la fonction de modifiant choc, c'est-à-dire qu'il permet d'améliorer le comportement au choc de la composition. A titre d'exemple, ce modifiant choc peut être un copolymère de l'éthylène, comme par exemple un de ceux décrits dans la demande US 2005/0131120 A1 aux paragraphes [0017] à [0022].

Selon un mode de réalisation des compositions selon l'invention, le polymère de la composition est essentiellement constitué d'au moins un polyester aliphatique ou semi-aliphatique, c'est-à-dire que la composition comprend au plus 5 % en poids de polymère additionnel, par rapport à la masse totale de polyesters aliphatiques ou semi-aliphatiques. Les compositions selon l'invention contiennent de préférence comme seuls polymère organique les polyesters aliphatique ou semi-aliphatique décrits ci-dessus.

La composition peut comprendre en outre d'autres additifs usuels à la fabrication des thermoplastiques, susceptibles d'améliorer au moins une des propriétés finales de la composition et/ou de faciliter le procédé de fabrication de ladite composition.

Les exemples additifs usuels peuvent être choisis parmi les antioxydants, les stabilisants, les absorbants UV, les agents antistatiques, les azurants optiques, les colorants ou les pigments, les agents nucléants, les agents retardateurs de flamme, les agents lubrifiants, les agents antibloquants, les agents de démoulage, les agents anti-mottant, les antimicrobiens, les anti-foggings et les agents d'expansion. La composition peut comprendre comme additifs usuels, en plus du polyester et du plastifiant, des renforts ou des charges, par exemple des fibres naturelles végétales telles que la sciure de bois, les fibres de bois ou les fibres de chanvre. Cette composition particulière présente une bonne tenue thermomécanique. Préférentiellement, ces additifs usuels sont présents dans des quantités ne dépassant pas 30% en masse de la composition, de préférence ne dépassant pas 20 % en masse de la composition.

Selon une variante de l'invention, la composition comprend par rapport à la masse totale de la composition :
- de 40 à 99% en masse de polyester aliphatique ou semi-aliphatique, avantageusement de 45 à 89%, préférentiellement de 50 à 88 % ;
- de 1 à 30 % en masse d'ester de 1,4:3,6-dianhydrohexitol, avantageusement de 11 à 25%, préférentiellement de 12 à 20% ;
- de 0 à 30 % en masse de polymère additionnel ;
- de 0 à 30 % d'un autre plastifiant et/ou d'additifs usuels à la fabrication des thermoplastiques.

Une façon de déterminer si le polyester aliphatique ou semi-aliphatique est plastifié par l'ester de 1,4:3,6-dianhydrohexitol est de comparer la température de transition vitreuse du mélange polyester - plastifiant (T_{g}1) à la température de transition vitreuse du polyester seul (T_{g}2). Si T_{g}1 est inférieure à T_{g}2, on peut considérer que le polyester est plastifié.

De préférence, la composition est telle que T_{g}1 < (T_{g}2 - 5), voire T_{g}1 < (T_{g}2 - 10), par exemple T_{g}1 < (T_{g}2 - 20), autrement dit, l'incorporation du plastifiant dans le polyester aliphatique ou semi-aliphatique se traduit par une réduction de la température de transition vitreuse supérieure à 5 °C, de préférence supérieure à 10 °C et en particulier supérieure à 20 °C.

Le PLA plastifié selon l'invention par un ester alkylique 1,4:3,6-dianhydrohexitol a de préférence une Tg proche de 40 °C.

Lorsque le polyester est un copolymère à blocs, il est possible que le polyester présente plusieurs températures de transition vitreuse. Dans ce cas, on considère que ce copolymère de polyester est plastifié lorsqu'au moins une de ses températures de transition vitreuse diminue.

La T_{g} peut être mesurée de manière connue par analyse calométrique différentielle (DSC, differential scanning calorimetry) avec une vitesse de chauffage de 10°C/minute : on peut réaliser cette mesure en effectuant une première chauffe de l'échantillon, un refroidissement jusqu'à une température inférieure à la température de transition vitreuse du polymère puis une seconde chauffe de l'échantillon pendant laquelle on mesure la température de transition vitreuse, les vitesses de chauffe et de refroidissement étant de 10 °C/minute.

Typiquement, on utilise le protocole suivant :
▪ 1^{ère} chauffe de -120 à 220 °C à 10°C/min ;
▪ refroidissement de 220°C à -120°C à 10°C/min ;
▪ 2^{nde} chauffe de -120 à 220°C à 10°C/min.

Comme expliqué précédemment, certains polyesters aliphatiques ou semi-aliphatiques, tels que le PLA ou le PGA sont très fragiles. Il est donc avantageux de les « plastifier » de manière suffisante afin d'en modifier les propriétés mécaniques et permettre ainsi leur utilisation dans des applications plus diverses. Ainsi, l'allongement à la rupture de la composition est avantageusement supérieure ou égale à 100%, voire supérieure ou égale à 500%. Cet allongement à la rupture peut être mesurée selon la norme EN ISO 527-1:1996.

Un autre objet de l'invention est un procédé de préparation de la composition selon l'invention comprenant une étape de mélange à l'état fondu du polyester aliphatique ou semi-aliphatique avec les autres constituants de la composition.

On peut utiliser les appareillages connus de l'homme du métier de mise en oeuvre des thermoplastiques, qui sont régulés en température, tels que les mélangeurs ou les extrudeuses. Par exemple, on peut utiliser tout type d'appareillage de mise en oeuvre telle qu'une extrudeuse, un malaxeur, un mélangeur interne ou un mélangeur externe comme un mélangeur à rouleaux.

L'invention a également pour objet un procédé de fabrication d'une composition selon l'invention comprenant une étape de mélange par extrusion du polyester aliphatique ou semi-aliphatique avec l'ester alkylique de 1,4:3,6-dianhydrohexitol à l'aide d'une extrudeuse

Le procédé mis en oeuvre par exemple à l'aide d'une extrudeuse bi-vis co-rotative, d'une extrudeuse bi-vis contrarotative, d'une extrudeuse mono-vis, préférentiellement au moyen d'une extrudeuse bi-vis corotative.

La température de l'appareillage de mise en oeuvre utilisé est adaptée à la nature du polyester introduit. Cette température est avantageusement comprise dans la gamme allant de 80 à 200°C, ce qui permet de conserver les propriétés plastifiantes de l'ester de 1,4:3,6-dianhydrohexitol. De plus, l'ester alkylique de 1,4:3,6-dianhydrohexitol n'est pas volatil et ne s'évapore pas dans cette gamme de température contrairement à de nombreux autres plastifiants connus.

La température est préférentiellement comprise dans la gamme allant de 130 à 180°C pour les compositions à base de PLA.

La composition peut être préparée en une seule étape, c'est-à-dire que les constituants sont introduits simultanément, ou en plusieurs étapes, c'est-à-dire que les constituants sont introduits successivement, par exemple en différents endroits de l'extrudeuse.

Préférentiellement, le procédé de fabrication de la composition selon l'invention comprend :
▪ une étape d'introduction de l'ester de 1,4:3,6-dianhydrohexitol dans une extrudeuse bi-vis co-rotative à l'aide d'un premier doseur ;
▪ une étape d'introduction du polyester à l'aide d'un second doseur situé plus loin le long de l'extrudeuse ;
▪ une étape de mélange des constituants de la composition dans la zone de mélange de l'extrudeuse ;
▪ une étape de récupération de la composition ainsi formée.

On obtient selon ce procédé une excellente homogénéisation de l'ester de 1,4:3,6-dianhydrohexitol dans la composition. Le bruit lors de l'extrusion peut ainsi être particulièrement limité en utilisant ce procédé.

Le procédé de fabrication comprenant une étape de mélange par extrusion peut être utilisé pour la fabrication d'un article extrudé comme des granulés ou des profilés. Le procédé de fabrication de cet article comprenant une étape de mélange à l'état fondu par extrusion peut également être suivie d'une étape de mise en forme de ce mélange à l'état fondu par moulage, injection, filage ou soufflage pour former respectivement un article moulé, injecté, filé ou soufflé.

L'invention porte donc sur tout type d'article extrudé, moulé, injecté, filé ou soufflé comprenant la composition selon l'invention.

Cet article peut être sous forme de fil, de joncs, de granulés, de feuille ou toute sorte d'objet tridimensionnel.

Des granulés peuvent être obtenus par granulation de joncs obtenus par extrusion de la composition.

Une feuille de la composition selon l'invention peut être obtenue par extrusion avec une filière plate en bout d'extrudeuse. La feuille ainsi obtenue peut ensuite être calandrée afin d'obtenir une épaisseur constante tout le long de la feuille. Il est précisé que le terme « feuille » inclut ici une feuille de n'importe quelle épaisseur et peut en particulier être un film comprenant la composition selon l'invention.

Cette feuille peut être monocouche ou multicouche, c'est-à-dire comprendre une première couche d'une composition selon l'invention et au moins une deuxième couche d'une composition différente de la première.

La deuxième couche peut être fabriquée à partir d'une composition comprenant un polymère (par exemple un polyester, une polyoléfine, un polyamide...), un métal, un oxyde de métal ou un oxyde de silicium.

Ces feuilles multicouches peuvent être fabriquées par co-extrusion des différentes couches avec une filière plate, par extrusion couchage ou par extrusion laminage. Une description détaillée des différentes couches pouvant être utilisées dans la feuille multicouche figure aux paragraphes [0037] à [0054] de la demande de brevet US2008/0071008 A1.

La composition selon l'invention peut être utilisée pour la fabrication d'emballages ou de contenants tels qu'un film, une tasse, un couvercle, un pot, une poche, un sac, une bouteille, une barquette, un capuchon, un bouchon.

Les feuilles monocouches ou multicouches sont particulièrement utiles comme intermédiaires pour la fabrication desdits emballages ou contenant, par thermoformages desdites feuilles.

La composition est également utile pour la fabrication de textiles tissés et non tissés. Elle peut être également utile pour la fabrication de couches pour bébé ou de produits pour hygiène féminine.

La composition peut aussi servir à la fabrication de colles, en particulier les colles thermofusibles similaires à celles décrites dans le brevet US 5, 252, 646, avec la différence que la composition selon l'invention comprend l'ester alkylique de 1,4:3,6-dianhydrohexitol utile à l'invention. Pour former une colle, la composition peut également comprendre des cires, ayant pour fonction d'augmenter le temps ouvert d'application de la colle, telles que les cires microcristallines, les cires d'amides grasses et les cires Fischer-Tropsch oxydées. La composition peut également comprendre des résines tackifiantes, permettant d'améliorer le « collant » de la colle, comme les colophanes, les dérivés de colophanes, les terpènes ou les terpènes modifiés. Il est précisé que les cires et les résines tackifiantes sont des polymères.

Une autre application de la composition selon l'invention est la fabrication de produits utiles dans le domaine médical, par exemple des fils pour recoudre les plaies, des stents, des appareils de dialyse ou des dispositifs de distribution de médicaments.

L'invention a également pour objet l'utilisation d'un ester alkylique de 1,4 :3,6-dianhydrohexitol choisi parmi les monoesters alkyliques et les diesters alkyliques d'isosorbide, d'isomannide et d'isoidide pour la plastification d'un polyester aliphatique ou semi-aliphatique tel que décrit ci-dessus.

Les différents modes préférés relatifs à la composition de l'invention exposés dans cette demande sont bien évidemment transposables à cette utilisation de l'ester alkylique de 1,4:3,6-dianhydrohexitol pour la plastification d'un polyester aliphatique ou semi-aliphatique.

Des modes de réalisation vont maintenant être détaillés dans les exemples qui suivent. Il est précisé que ces exemples illustratifs ne limitent d'aucune façon la portée de la présente invention.

### Exemples

### Exemple 1 - Plastification des polyesters aliphatiques et semi-aliphatiques: évaluation sensitive et évolution de la température de transition vitreuse

### Produits utilisés

### Polymères utilisés

- PLA 1 : Poly(acide lactique) grade 6302D (Natureworks) - Mw = 170000 g/mol
- PCL : Polycaprolactone- CAPA® 650 (SOLVAY)
- PBAT : Poly(butylene adipate terephtalate) Ecoflex FBX 7011 (BASF)
- PBS : Poly(butylene succinate) EnPol G4560J (IRE Chemical)
- PET : Poly(ethylene terephtalate)- Lighter C93 - (EQUIPOLYMERS)
- PBT : Poly(butylene terephtalate)- Valox 325F (SABIC)
- PS : Polystyrene Cristal - PS 500 (SABIC)

### Plastifiants :

- DEI (plastifiant utilisé dans l'invention) : Di-ester alkylique d'isosorbide (groupes alkyle en C₇)
- DINP : Di iso nonyl phtalate (SIGMA ALDRICH)
- Jayflex Dina Z : Di iso nonyl adipate (Exxon-Mobil)
- Diplast TM ST : Trimellitate (Polynt)

### Préparation des compositions

On utilise pour préparer ces compositions un malaxeur RHEOMIX 600 (HAAKE) de capacité de 120 cm³ équipé de rotors cylindriques. On introduit le polymère ainsi que le plastifiant à une température initiale de 50 °C, la vitesse des rotors étant de 80 tours/min. Le mélange comprend en masse 80% de polymère et 20% de plastifiant. On monte progressivement la température pendant une durée de 5 minutes jusqu'à la température de mise en oeuvre du produit (TMEO) puis on homogénéise le mélange à cette température pendant 10 minutes à la TMEO. Après avoir recueilli le polymère plastifié, on le met en forme à l'aide d'une presse chauffante (CARVER) sous forme de films d'environ 150 microns d'épaisseur (sous une pression de 20 tonnes pendant 3 minutes à la TMEO).

On évalue sur les films si le plastifiant apporte, au toucher, une plastification à savoir une augmentation de la souplesse et de l'aptitude à l'étirage. On vérifie aussi la bonne compatibilité du plastifiant avec le polyester. Celle-ci se traduit par une faible exsudation, voire par l'absence d'exsudation.

Dans le Tableau 1 figurent les résultats obtenus pour les mélanges de PLA et différents plastifiants. La TMEO pour le PLA est de 150°C.

**Tableau 1 : Evaluation sensitive de la plastification du PLA1 par différents plastifiants**

| Plastifiant | Exsudation | Effet plastifiant sur film |
|---|---|---|
| DINP | non | non |
| JAYFLEX DINA - Z | non | non |
| DIPLAST TM/ST | oui | non |
| DEI | non | oui |

On a pu remarquer que le DEI donne un effet plastifiant sur le PLA à la fois en ce qui concerne l'aptitude à l'étirage et la souplesse. De plus, il apparaît compatible avec le PLA car aucune exsudation n'est observée.

Au contraire, les plastifiants connus du PVC ne montrent pas d'effet plastifiant sur les films, voire parfois exsudent du polymère.

On réalise également des mélanges des différents polymères utilisés avec le DEI selon le protocole exposé précédemment. Dans le Tableau 2 figurent les résultats obtenus.

**Tableau 2 : Evaluation sensitive de la plastification de différents polyesters par le DEI**

| Polymère | TMEO | Exsudation | Effet plastifiant sur film |
|---|---|---|---|
| PLA | 150°C | non | oui |
| PCL | 100°C | non | oui |
| PBAT | 170°C | oui (faible) | oui |
| PBS | 150°C | non | oui |

On peut remarquer que l'effet plastifiant observé pour le PLA est également observé pour le PCL et le PBS.

Les compositions à base de PET, de PBT (différents des polyesters aliphatiques et semi-aliphatiques utiles à l'invention) ou de PS ne figurent pas dans le tableau : on n'observe pas de plastification du polymère et une dégradation du matériau est observée, liée à une dégradation thermique du plastifiant due à une TMEO trop élevée (supérieure à 220 °C).

L'effet plastifiant est également observé pour le PBAT, qui est un polyester semi-aliphatique. On observe cependant une légère exsudation montrant que ces polyesters aromatiques sont légèrement moins compatibles avec le DEI.

On réalise des mélanges de PLA et de DEI en utilisant le même protocole que précédemment, en utilisant des quantités de DEI allant de 5% à 12,5% en masse. On mesure la transition vitreuse du PLA ou des mélanges par DSC (Mettler Toledo) en utilisant le protocole suivant :
▪ 1^{ère} chauffe de -120 à 220°C à 10°C/min ;
▪ refroidissement de 220°C à -120°C à 10°C/min ;
▪ 2^{nde} chauffe de -120 à 220°C à 10°C/min.

La température de transition vitreuse reportée dans le Tableau 3 est la température observée lors de la 2^{nde} chauffe.

**Tableau 3 : Evolution de la T_{g} du PLA en fonction du taux de DEI incorporé**

| PLA | Teneur en agent plastifiant (DEI) | Tg mesurée au deuxième chauffage (°C) |
|---|---|---|
| 6320 | 0 % | 54 |
| | 5 % | 46 |
| | 10 % | 39 |
| | 12,5 % | 34 |

On observe une plastification dès les bas taux en DEI comme le montre l'abaissement de la température de transition vitreuse du produit à 5%. La plastification est améliorée en augmentant le taux en DEI.

### Exemple 2 - Plastification du PLA : Détermination des propriétés mécaniques

### Produits utilisés

- Polymère utilisé
   - PLA 2 : Poly(acide lactique) grade 3051 D (Natureworks) - Mw = 95000 g/mol
- Plastifiants :
   - DEI (plastifiant utilisé dans l'invention) : Di-ester d'isosorbide en C₇ ;
   - PEG 400 : Polyéthylène glycol de poids moléculaire 400g/mol (SIGMA-ALDRICH) ;
   - Triacétine (SIGMA-ALDRICH).

### Préparation des compositions

On utilise pour préparer ces compositions une extrudeuse bi-vis corotative TSA EMP 26-40 (TSA Industriale Srl), l'extrusion étant réalisée avec une filière de 3 cm de diamètre.

On mélange au PLA les différents plastifiants dans des proportions massiques du Tableau 4.

Les conditions de préparation sont les suivantes :
- Profil de température : 170°C pour les 8 zones de chauffe)
- Température de tête filière : 170°C
- Introduction du plastifiant par pompe doseuse en zone d'entrée puis introduction du polymère en zone 3 par side-feeder
- Vitesse vis : 200tr/min
- Débit : 5kg/h.

On a pu constater que l'utilisation de DEI avec le PLA permet de diminuer le bruit lors de l'extrusion du PLA.

Après avoir recueilli les joncs refroidis et découpés en granulés, les produits sont ensuite injectés sur presse à injection CARVER sous forme d'éprouvettes de traction et de flexion dans les conditions ci-dessous :
- Températures de fourreaux : 160 / 160 / 160
- Vitesse de rotation de la vis = 280 tr/min
- Temps de cycle : 1 à 2 min
- Température du moule : 5 à 20 °C
- Pression de maintien = 100 kpsi/cm²

Ces éprouvettes sont ensuite caractérisées en traction selon la norme EN ISO 527-1:1996 (allongement et contrainte à la rupture) et en flexion selon la norme NF EN ISO 178:2003-05 (module de rigidité).

Les granulés sont aussi caractérisés en DSC pour mesurer la transition vitreuse selon un protocole identique à celui de l'exemple 1.

Le Tableau 4 ci-dessous présente, pour chaque composition testée, l'ensemble des propriétés modifiées par la plastification, à savoir l'abaissement du module de rigidité et de la contrainte à la rupture, l'augmentation de l'allongement à la rupture et la diminution de la température de transition vitreuse.

**Tableau 4 : Effet de l'incorporation du plastifiant sur les propriétés mécaniques et la température de transition vitreuse du PLA**

| Grade PLA | Taux plastifiant | Module Young Flexion (MPa) | Allongement à la rupture (%) | Contrainte à la rupture (MPa) | Tg (2ème chauffage) |
|---|---|---|---|---|---|
| 3051D | 0% | 3602,1 | 19,9 | 61,5 | 58 |
| | 12,5% DEI | 1878,2 | 420,6 | 21,0 | 35 |
| | 14% DEI | 1239,7 | 595,3 | 29,8 | 32 |
| | | | | | |
| | 10% PEG 400 | 1948,7 | 395,8 | 23,5 | 34 et -77 |
| | 10% Triacétine | 2409,2 | 15,9 | 40,1 | 35 |

On peut observer sur les compositions PLA à base de DEI des propriétés importantes de plastification du DEI sur le PLA puisque :
- le module en flexion est diminué de moitié à 12,5-14% en DEI par rapport au PLA pur ;
- aptitude à l'étirage : l'allongement à la rupture passe de 20% (soit un plastique très cassant) à des niveaux très importants (de 400 à 600%) ;
- une diminution d'environ un facteur 2 à 3 de la contrainte à la rupture.

Ces modifications de propriétés mécaniques sont corrélées avec l'abaissement de la transition vitreuse du PLA.

Lorsqu'on compare les compositions à base de DEI et à base d'autres plastifiants reconnus du PLA (PEG 400 ou triacétine), on peut noter que :
- le pouvoir plastifiant de la triacétine est nettement moins bon que celui du DEI puisqu'on conserve le caractère cassant du produit (faible allongement à la rupture) ;
- le pouvoir plastifiant du PEG 400 est comparable et du même ordre de grandeur que celui du DEI.

Cependant, contrairement au DEI, les compositions à base de triacétine et de PEG 400 ne sont pas satisfaisantes d'un point de vue de la compatibilité du plastifiant avec le PLA, même à des taux d'incorporation de 10% en masse. En effet, nous avons pu observer :
- une exsudation importante lors de l'extrusion du produit dès la phase de préparation pour la triacétine ;
- un signal de DSC correspondant à la température de transition vitreuse du PEG 400 pur (TG à -77°C), signe d'une phase de PEG séparée, c'est-à-dire d'un manque de compatibilité du PEG avec le PLA.

### Exemple 3 - Plastification de mélanges de Polyester aliphatique et semi-aliphatique/semi-aromatique : Détermination des propriétés mécaniques

### Produits utilisés

- Mélange de polyesters : ECOVIO^{®} (BASF) constitué d'un mélange de PBAT (55% en masse) et de PLA (45% en masse) ;
- DEI (plastifiant utilisé dans l'invention) : Di-ester d'isosorbide en C7.

Les compositions sont préparées selon le même protocole que celui de l'exemple 2. De la même manière, les propriétés sont mesurées en utilisant les mêmes conditions de mesure que l'exemple 2.

Le Tableau 5 présente les propriétés obtenues pour les mélanges de polyester avec le DEI.

**Tableau 5 : Effet de l'incorporation du plastifiant sur les propriétés mécaniques et la température de transition vitreuse des mélanges de polyesters**

| Taux plastifiant | Module Young Flexion (MPa) | Allongement à la rupture (%) | Contrainte à la rupture (MPa) | Tg (2ème chauffage) |
|---|---|---|---|---|
| 0% | **1100,23** | 403,36 | 20,9 | -34°C et 56°C |
| 12,5% DEI | **464,30** | 655,08 | 17,11 | -40°C et 40°C |

Ces essais montrent que le DEI a bien un effet plastifiant sur les mélanges de polyesters :
▪ L'incorporation de 14% de DEI diminue le module en flexion d'un facteur 4 par rapport au mélange sans plastifiant.
▪ L'ajout de DEI augmente de manière importante l'allongement à la rupture.

Ces modifications de propriétés mécaniques sont confirmées par les diminutions constatées des températures de transition vitreuse du PBAT et du PLA.

### Exemple 4 : Mesure du bruit de films de PLA

### Produits

PLA 3 : Poly(acide lactique) grade 2002D (Natureworks) - Mw = 200000 g/mol DEI (Plastifiant utilisé dans l'invention)

On utilise pour préparer ces compositions un malaxeur RHEOMIX 600 (HAAKE) de capacité de 120 cm3 équipé de rotors cylindriques. On introduit le polymère ainsi que le plastifiant à une température initiale de 50°C, la vitesse des rotors étant de 80 tours/min. Le mélange comprend, en masse, 80% de PLA et 15% ou 20% de plastifiant. On monte progressivement la température pendant une durée de 5 minutes jusqu'à la température de 170°C puis on homogénéise le mélange à cette température pendant 15 minutes.

Après avoir recueilli le polymère plastifié, on le met en forme à l'aide d'une presse chauffante (CARVER) sous forme de films d'environ 180 microns d'épaisseur (sous une pression de 20 tonnes pendant 3 minutes à 170°C.

### Conditions de réalisation du test:

Les films obtenus ci-dessus sont froissés de manière identique manuellement et la mesure du bruit du froissage est effectuée à l'aide d'un sonomètre, de marque B&K, type 2232, à une distance entre la sonde de mesure et le film froissé de 10 cm, c'est-à-dire une distance très proche du film.

Les résultats obtenus sont les suivants :

| **Compositions** | **Méthode** | **Distance de la sonde de mesure** | **Epaisseur (mm)** | **niveaux sonore en dB(A)** |
|---|---|---|---|---|
| PLA 2002D pur | Froissage | à 10 cm | 0,18 | 91 |
| PLA 2002D + 15% DEI | | | 0,18 | 87 |
| PLA 2002D + 20% DEI | | | 0,17 | 82 |

On observe que l'utilisation du DEI diminue fortement le bruit émis lorsque l'on froisse le film. En effet, une diminution de 3 dB équivaut à une diminution de moitié du bruit. L'utilisation de 15% de DEI permet donc de diviser par deux le bruit émis par le film. De plus, en augmentant le taux de plastifiant de 15% à 20%, l'intensité sonore du froissage est diminuée d'un facteur 8 par rapport au bruit émis par un film de PLA pur (diminution de 9 dB).

## Revendications

1. Composition comprenant,
- au moins un polyester aliphatique ou semi-aliphatique, contenant au moins 70 % en moles de motifs aliphatiques saturés, ces motifs étant susceptibles d'être obtenus par la polycondensation de monomères choisis parmi :
▪ les acides hydroxyalcanoïques saturés de formule :
HO-CₓH₂ₓ-COOH,
▪ les acides dicarboxyliques saturés de formule :
HOOC-CₓH₂ₓ-COOH et
▪ les diols saturés de formule :
HO-CₓH₂ₓ-OH
où x = 1 - 20, de préférence 1 - 6,
la partie restante des motifs étant formée par des motifs aromatiques ;
et
- au moins un ester alkylique de 1,4 :3,6-dianhydrohexitol choisi parmi les monoesters alkyliques et les diesters alkyliques d'isosorbide, d'isomannide et d'isoidide.

2. Composition selon la revendication 1, **caractérisé en ce que** le ou les groupes alkyle des esters de 1,4 :3,6-dianhydrohexitol sont des groupes alkyle en C₃₋₁₅, de préférence des groupes alkyle en C₄₋₁₀, en particulier en C₆₋₉.

3. Composition selon la revendication précédente **caractérisée en ce que** le groupe alkyle de l'ester de 1,4 :3,6-dianhydrohexitol est linéaire ou ramifié.

4. Composition selon l'une des revendications précédentes **caractérisée en ce que** la quantité d'ester alkylique de 1,4:3,6-dianhydrohexitol est comprise dans la gamme allant de 1 à 30% en masse rapportée à la masse totale de polyesters aliphatiques et semi-aliphatiques.

5. Composition selon la revendication précédente **caractérisée en ce que** la que la quantité d'ester alkylique de 1,4:3,6-dianhydrohexitol est comprise dans la gamme allant de 10 à 25% en masse, avantageusement de 11 à 20% en masse, de préférence de 12 à 18% en masse, rapportée à la masse totale de polyesters aliphatiques et semi-aliphatiques.

6. Composition selon l'une des revendications précédentes **caractérisée en ce que** l'ester alkylique de 1,4:3,6-dianhydrohexitol est un diester alkylique de 1,4 :3,6-dianhydrohexitol.

7. Composition selon l'une des revendications précédentes **caractérisée en ce que** l'ester de 1,4:3,6-dianhydrohexitol est un ester alkylique d'isosorbide, de préférence un diester alkylique d'isosorbide.

8. Composition selon l'une des revendications précédentes **caractérisée en ce que** le polyester aliphatique ou semi-aliphatique contient au moins 80 % en moles, de préférence au moins 90 % en moles de motifs aliphatiques saturés.

9. Composition selon l'une des revendications précédentes **caractérisée par le fait que** le polyester est constitué de 100 % de motifs aliphatiques saturés.

10. Composition selon l'une des revendications précédentes **caractérisée en ce que** le polyester est choisi dans le groupe constitué de poly(acide glycolique) (PGA), poly(acide lactique) (PLA), poly(acide 3-hydroxypropionique) (PHP), poly(acide 2-hydroxybutyrique) (P2HB), poly(acide 3-hydroxybutyrique) (PHB), poly(acide 4-hydroxybutyrique) (P4HB), poly(acide 3-hydroxyvalérique) (PHV), poly(acide 4-hydroxyvalérique) (P4HV), poly(acide 5-hydroxyvalérique) (P5HV), polycaprolactone (PCL), poly(acide 3-hydroxyhexanoïque), poly(acide 4-hydroxyhexanoïque), poly(acide 3-hydroxyheptanoïque), poly(butylène succinate) (PBS), poly(butylène adipate) (PBA), poly(éthylène succinate) et poly(éthylène adipate), de préférence dans le groupe constitué de poly(acide glycolique) (PGA), poly(acide lactique) (PLA), polycaprolactone (PCL) et poly(butylène succinate) (PBS).

11. Composition selon la revendication 9 **caractérisée en ce que** le polyester aliphatique est un poly(acide hydroxyalcanoïque en C₂₋₇), de préférence un poly(acide lactique).

12. Composition selon la revendication 11, **caractérisée en ce que** le polyester aliphatique est un poly(acide lactique) semi-cristallin comprenant de 90% à 99,9% en moles de motifs (D)-acide lactique et de 0,1 à 10% de motifs (L)-acide lactique.

13. Procédé de fabrication d'une composition selon l'une des revendications précédentes **caractérisé en ce qu'**il comprend une étape de mélange par extrusion du polyester aliphatique ou semi-aliphatique avec l'ester alkylique de 1,4:3,6-dianhydrohexitol à l'aide d'une extrudeuse, de préférence une extrudeuse bi-vis co-rotative.

14. Procédé de fabrication selon la revendication précédente, **caractérisé en ce que** la température de l'extrudeuse utilisée lors du mélange est comprise dans la gamme allant de 80 à 200°C.

15. Article extrudé, moulé, injecté, filé ou soufflé comprenant la composition selon l'une des revendications 1 à 12.

16. Article selon la revendication 15, **caractérisé en ce qu'**il s'agit d'un fil, d'un granulé, d'une feuille ou d'un objet tridimensionnel.

17. Utilisation de la composition selon l'une des revendications 1 à 12 pour la fabrication d'emballages, de contenants, de textiles tissés et non-tissés, de couches pour bébé, de produits pour hygiène féminine, de colles ou de produits utiles dans le domaine médical.

18. Utilisation d'un ester alkylique de 1,4 :3,6-dianhydrohexitol choisi parmi les monoesters alkyliques et les diesters alkyliques d'isosorbide, d'isomannide et d'isoidide pour la plastification d'un polyester aliphatique ou semi-aliphatique, contenant au moins 70 % en moles de motifs aliphatiques saturés, ces motifs étant susceptibles d'être obtenus par la polycondensation de monomères choisis parmi :
les acides hydroxyalcanoïques saturés de formule :
HO-CₓH₂ₓ-COOH
les acides dicarboxyliques saturés de formule
HOOC-CₓH₂ₓ -COOH
et les diols saturés de formule
HO-CₓH₂ₓ-OH,
où x = 1 - 20, de préférence 1 - 6,
la partie restante des motifs étant formée par des motifs aromatiques.

## Patentansprüche

1. Zusammensetzung umfassend,
- mindestens einen aliphatischen oder halb-aliphatischen Polyester, umfassend mindestens 70 Mol-% von gesättigten aliphatischen Einheiten, wobei die Einheiten durch Polykondensation von Monomeren erhalten werden können, welche ausgewählt sind aus:
• gesättigten Hydroxyalkansäuren der Formel:
HO-CₓH₂ₓ-COOH
• gesättigten Dicarbonsäuren der Formel:
HOOC-CₓH₂ₓ-COOH, und
• gesättigten Diolen der Formel:
HO-CₓH₂ₓ-OH
wobei x = 1-20, vorzugsweise 1-6 ist,
wobei der restliche Teil der Einheiten aus aromatischen Einheiten gebildet wird;
und
- mindestens einen Alkylester von 1,4:3,6-Dianhydrohexitol ausgewählt aus alkylischen Monoestern und alkylischen Diestern von Isosorbid, Isomannid und Isoidid.

2. Zusammensetzung nach Anspruch 1, **dadurch gekennzeichnet, dass** die Alkylgruppe(n) von 1,4:3,6-Dianhydrohexitolestern C₃₋₁₅ Alkylgruppen, vorzugsweise C₄-₁₀ Alkylgruppen, insbesondere C₆-₉, sind.

3. Zusammensetzung nach dem vorhergehenden Anspruch, **dadurch gekennzeichnet, dass** die Alkylgruppe von 1,4:3,6-Dianhydrohexitolester linear oder verzweigt ist.

4. Zusammensetzung nach einem der vorhergehenden Ansprüche, **dadurch gekennzeichnet, dass** die Menge an alkylischem 1,4:3,6-Dianhydrohexitolester im Bereich von 1 bis 30 Gewichts-% bezogen auf das Gesamtgewicht von aliphatischen und halb aliphatischen Polyestern umfasst ist.

5. Zusammensetzung nach dem vorhergehenden Anspruch, **dadurch gekennzeichnet, dass** die Menge an alkylischem 1,4:3,6-Dianhydrohexitolester im Bereich von 10 bis 25 Gewichts-%, vorzugsweise von 11 bis 20 Gewichts-%, vorzugsweise von 12 bis 18 Gewichts-%, bezogen auf das Gesamtgewicht von aliphatischen und halb aliphatischen Polyestern umfasst ist.

6. Zusammensetzung nach einem der vorhergehenden Ansprüche, **dadurch gekennzeichnet, dass** der alkylische 1,4:3,6-Dianhydrohexitolester ein alkylischer 1,4:3,6-Dianhydrohexitoldiester ist.

7. Zusammensetzung nach einem der vorhergehenden Ansprüche, **dadurch gekennzeichnet, dass** der 1,4:3,6-Dianhydrohexitolester ein alkylischer Isosorbidester, vorzugsweise alkylischer Isosorbiddiester ist.

8. Zusammensetzung nach einem der vorhergehenden Ansprüche, **dadurch gekennzeichnet, dass** der aliphatische oder halb aliphatische Polyester mindestens 80 Mol-%, vorzugsweise mindestens 90 Mol-% von gesättigten aliphatischen Einheiten enthält.

9. Zusammensetzung nach einem der vorhergehenden Ansprüche, **dadurch gekennzeichnet, dass** der Polyester aus 100% von gesättigten aliphatischen Einheiten besteht.

10. Zusammensetzung nach einem der vorhergehenden Ansprüche, **dadurch gekennzeichnet, dass** der Polyester ausgewählt ist aus der Gruppe bestehend aus Poly(glykolsäure) (PGA), Poly(milchsäure) (PLA), Poly(3-hydroxypropionsäure) (PHP), Poly(2-hydroxybutyrsäure) (P2HB), Poly(3-hydroxybutyrsäure) (PHB), Poly(4-hydroxybutyrsäure) (P4HB), Poly(3-hydroxyvaleriansäure) (PHV), Poly(4-hydroxyvaleriansäure) (P4HV), Poly(5-hydroxyvaleriansäure) (P5HV), Polycaprolacton (PCL), Poly(3-hydroxy-hexansäure), Poly(4-hydroxyhexansäure), Poly(3-hydroxyheptansäure), Poly(butylensuccinat) (PBS), Poly(butylenadipat) (PBA), Poly(ethylensuccinat) und Poly(ethylenadipat), vorzugsweise aus der Gruppe bestehend aus Poly(glykolsäure) (PGA), Poly(milchsäure) (PLA), Polycaprolacton (PCL) und Poly(butylensuccinat) (PBS).

11. Zusammensetzung nach Anspruch 9, **dadurch gekennzeichnet, dass** der aliphatische Polyester ein Poly(C₂₋₇hydroxyalkansäure), vorzugsweise eine Poly(milchsäure) ist.

12. Zusammensetzung nach Anspruch 11, **dadurch gekennzeichnet, dass** der aliphatische Polyester eine halbkristalline Poly(milchsäure) ist umfassend von 90% bis 99,9 Mol-% von (D)-Milchsäure-Einheiten und von 0,1 bis 10% von (L)-Milchsäure-Einheiten.

13. Verfahren zur Herstellung einer Zusammensetzung nach einem der vorhergehenden Ansprüche, **dadurch gekennzeichnet, dass** sie einen Schritt des Mischens durch Extrusion des aliphatischen oder halb-aliphatischen Polyesters mit dem alkylischen 1,4:3,6-Dianhydrohexitolester mithilfe eines Extruders, vorzugsweise eines gleichlaufenden Zwei-Schneckenextruders umfasst.

14. Verfahren zur Herstellung nach dem vorhergehenden Anspruch, **dadurch gekennzeichnet, dass** die Temperatur des Extruders, welcher während des Mischens verwendet wird, im Bereich von 80 bis 200 °C umfasst ist.

15. Extrudierter, geformter, eingespritzter, gesponnener oder geblasener Gegenstand umfassend die Zusammensetzung nach einem der Ansprüche 1 bis 12.

16. Gegenstand nach Anspruch 15, **dadurch gekennzeichnet, dass** er ein Faden, ein Granulat, eine Folie oder ein dreidimensionales Objekt ist.

17. Verwendung der Zusammensetzung nach einem der Ansprüche 1 bis 12 zur Herstellung von Verpackungen, Behältern, gewebten und nicht gewebten Textilien, Babywindeln, Damenhygieneprodukten, Klebstoffen oder Produkten, welche im medizinischen Bereich nützlich sind.

18. Verwendung eines Alkylesters von 1,4:3,6-Dianhydrohexitol ausgewählt aus alkylischen Monoestern und alkylischen Diestern von Isosorbid, Isomannid und Isoidid bei der Plastifizierung eines aliphatischen oder halb-aliphatischen Polyesters enthaltend mindestens 70 Mol-% von gesättigten aliphatischen Einheiten, wobei die Einheiten durch Polykondensation von Monomeren erhalten werden können, welche ausgewählt sind aus:
gesättigten Hydroxyalkansäuren der Formel:
HO-CₓH₂ₓ-COOH
gesättigten Dicarbonsäuren der Formel:
HOOC-CₓH₂ₓ-COOH
und gesättigten Diolen der Formel:
HO-CₓH₂ₓ-OH
wobei x = 1-20, vorzugsweise 1-6 ist,
wobei der restliche Teil der Einheiten aus aromatischen Einheiten gebildet wird.

## Claims

1. A composition comprising:
- at least one aliphatic or semi-aliphatic polyester, containing at least 70 mol% of saturated aliphatic units, these units being capable of being obtained by polycondensation of monomers chosen from:
▪ saturated hydroxyalkanoic acids of formula:
HO-CₓH₂ₓ-COOH,
▪ saturated dicarboxylic acids of formula:
HOOC-CₓH₂ₓ-COOH and
▪ saturated diols of formula:
HO-CₓH₂ₓ-OH
where x = 1 - 20, preferably 1 - 6,
the remaining portion of the units being formed by aromatic units; and
- at least one 1,4:3,6-dianhydrohexitol alkyl ester chosen from isosorbide, isomannide and isoidide monoalkyl esters and dialkyl esters.

2. The composition as claimed in claim 1, **characterized in that** the alkyl group or groups of the 1,4:3,6-dianhydrohexitol esters are C₃₋₁₅ alkyl groups, preferably C₄₋₁₀ alkyl groups, in particular C₆₋₉ alkyl groups.

3. The composition as claimed in the preceding claim, **characterized in that** the alkyl group of the 1,4:3,6-dianhydrohexitol ester is linear or branched.

4. The composition as claimed in one of the preceding claims, **characterized in that** the amount of 1,4:3,6-dianhydrohexitol alkyl ester is within the range extending from 1 to 30% by weight, with respect to the total weight of aliphatic and semi-aliphatic polyesters.

5. The composition as claimed in the preceding claim, **characterized in that** the amount of 1,4:3,6-dianhydrohexitol alkyl ester is within the range extending from 10 to 25% by weight, advantageously from 11 to 20% by weight, preferably from 12 to 18% by weight, with respect to the total weight of aliphatic and semi-aliphatic polyesters.

6. The composition as claimed in one of the preceding claims, **characterized in that** the 1,4:3,6-dianhydrohexitol alkyl ester is a 1,4:3,6-dianhydrohexitol dialkyl ester.

7. The composition as claimed in one of the preceding claims, **characterized in that** the 1,4:3,6-dianhydrohexitol ester is an isosorbide alkyl ester, preferably an isosorbide dialkyl ester.

8. The composition as claimed in one of the preceding claims, **characterized in that** the aliphatic or semi-aliphatic polyester comprises at least 80 mol%, preferably at least 90 mol%, of saturated aliphatic units.

9. The composition as claimed in one of the preceding claims, **characterized in that** the polyester is composed of 100% of saturated aliphatic units.

10. The composition as claimed in one of the preceding claims, **characterized in that** the polyester is chosen from the group consisting of poly(glycolic acid) (PGA), poly(lactic acid) (PLA), poly(3-hydroxypropionic acid) (PHP), poly(2-hydroxybutyric acid) (P2HB), poly(3-hydroxybutyric acid) (PHB), poly(4-hydroxybutyric acid) (P4HB), poly(3-hydroxyvaleric acid) (PHV), poly(4-hydroxyvaleric acid) (P4HV), poly(5-hydroxyvaleric acid) (P5HV), polycaprolactone (PCL), poly(3-hydroxyhexanoic acid), poly(4-hydroxyhexanoic acid), poly(3-hydroxyheptanoic acid), poly(butylene succinate) (PBS), poly(butylene adipate) (PBA), poly(ethylene succinate) and poly(ethylene adipate), preferably from the group consisting of poly(glycolic acid) (PGA), poly(lactic acid) (PLA), polycaprolactone (PCL) and poly(butylene succinate) (PBS).

11. The composition as claimed in claim 9, **characterized in that** the aliphatic polyester is a poly(C₂₋₇ hydroxyalkanoic acid), preferably a poly(lactic acid).

12. The composition as claimed in claim 11, **characterized in that** the aliphatic polyester is a semicrystalline poly(lactic acid) comprising from 90 to 99.9 mol% of D-lactic acid units and from 0.1 to 10% of L-lactic acid units.

13. A process for the manufacture of a composition as claimed in one of the preceding claims, **characterized in that** it comprises a step of blending by extrusion of the aliphatic or semi-aliphatic polyester with the 1,4:3,6-dianhydrohexitol alkyl ester using an extruder, preferably a corotating twin-screw extruder.

14. The manufacturing process as claimed in the preceding claim, **characterized in that** the temperature of the extruder used during the blending is within the range extending from 80 to 200°C.

15. An extruded, molded, injection molded, spun or blow molded article comprising the composition as claimed in one of claims 1 to 12.

16. The article as claimed in claim 15, **characterized in that** it is a yarn, a granule, a sheet or a three-dimensional object.

17. The use of the composition as claimed in one of claims 1 to 12 in the manufacture of packagings, of containers, of woven and nonwoven textiles, of diapers for babies, of feminine hygiene products, or adhesives or of products of use in the medical field.

18. The use of the composition as claimed in one of claims 1 to 12 chosen from isosorbide, isomannide and isoidide monoalkyl esters and dialkyl esters in the plasticization of an aliphatic or semi-aliphatic polyester containing at least 70 mol% of saturated aliphatic units, these units being capable of being obtained by the polycondensation of monomers chosen from:
saturated hydroxyalkanoic acids of formula:
HO-CₓH₂ₓ-COOH
saturated dicarboxylic acids of formula:
HOOC-CₓH₂ₓ -COOH
and saturated diols of formula:
HO-CₓH₂ₓ-OH,
where x = 1 - 20, preferably 1 - 6,
the remaining portion of the units being formed by aromatic units.
